# EUROPEAN PATENT SPECIFICATION

(11) **EP 2 051 550 B1**
(45) Date of publication and mention of the grant of the patent: **11.07.2012**
(21) Application number: 07254158.4
(22) Date of filing: 19.10.2007
(51) Int. Cl.: H04M 3/51, H04W 4/22, H04W 4/02, H04M 3/42

(54) **Acquiring a service number and further information**
Ermittlung einer Dienstnummer und weiterer Information
Acquisition d'un nombre de service et d'autre information

(43) Date of publication of application: 22.04.2009
(73) Proprietor: Nokia Siemens Networks Oy, 02610 Espoo (FI)
(72) Inventor: Garcia, Miguel Angel, 00690 Helsinki (FI); Kall, Jan, 02730 Espoo (FI); Tschofenig, Hannes, 81735 München (DE)
(74) Representative: Borgström, Markus

(56) References cited:
- WO-A-00/41421
- WO-A-2004/071115
- WO-A-2007/016452

## Description

### Field of the Invention:

The invention relates to a method in which a query is sent to a server and a response is received therefrom, a system in which a node is arranged to send a response to a server and to receive a response therefrom as well as a server for receiving a query and providing a response thereto.

### Description of the Related Art:

A communication system can be seen as a facility that enables communication sessions between two or more entities such as user equipment and/or other nodes associated with the communication system. The communication may comprise, for example, communication of voice, data, multimedia and so on. A session may, for example, be a telephone call between users or multi-way conference session, or a communication session between user equipment and an application server (AS), for example a service provider server. The establishment of these sessions generally enables a user to be provided with various services.

A communication system typically operates in accordance with a given standard or specification which sets out what the various entities associated with the communication system are permitted to do and how that should be achieved. For example, the standard or specification may define if the user, or more precisely, user equipment is provided with a circuit switched service and/or a packet switched service. Communication protocols and/or parameters which shall be used for the connection may also be defined. In other words, a specific set of "rules" on which the communication can be based on needs to be defined to enable communication by means of the system.

Communication systems providing wireless communication for user equipment are known. An example of the wireless systems is the public land mobile network (PLMN) and another example is the wireless local area network (WLAN). Fixed broadband access is another type of access.

It is known to provide IP voice services to user equipment which is arranged to be mobile. In order to satisfy regulatory requirements, it is necessary to provide IP emergency communications. The patent application WO 2007/016452 describes a method of enabling emergency communications in IP networks. The patent application WO 00/41421 describes a method of providing regionally limited emergency communications in mobile communication system.

The process of making an emergency call requires several steps. One step is the requirement that an end point (for example, user equipment) or a proxy finds out a PSAP (public safety answering point) which serves the current location of the end user. One known method is currently being defined in the IETF ECRIT (Internet Engineering Task Force Emergency Context Resolution with Internet Technologies Working Group) is the location-to-service translation (LoST) protocol. LoST is a simple query/response protocol built on top of HTTP (hypertext transfer protocol). A host sends a query asking for piece of particular information and the response contains the information. The core of the LoST protocol consists of a <findService> query which contains the location of the user.

A <findServiceResponse> response contains, for example, a service URI (uniform resource location identifier) <URI>. This will identify the PSAP serving the location of the end point, the end point being the user. The <findServiceResponse> response also contains other pieces of information such as <service boundary> and a <service number>. The <service boundary> indicates the geographical region for which the identified PSAP is responsible. The <service number> indicates a phone number that can be dialled to reach such PSAP, for example 112, 911, or 999. The <URI> element indicates the address that the end point may use to contact the PSAP. That address may take the form of a SIP URI (Session Internet Protocol Uniform Resource Location Identifier).

When the user equipment is booted-up, the user equipment contacts a LoST server to acquire the <Service number> and other information. If the user dials the service number, e.g. 112, 999 or 911, the call is identified as an emergency call and the emergency call procedures apply.

On reception of the <findServiceResponse>, the user equipment binds <serviceBoundary> geographical area to both the local PSAP number <service number> as well as the URI associated with that PSAP <URI>.

However, this known method has some disadvantages. In some countries, the PSAP may have a boundary of operation per city area or city region. However, in some countries for example Norway, there are only a few PSAPs and each PSAP covers a large part of the country. The current method requires that the user equipment constantly checks its location against the current local PSAP boundary. Whenever the user equipment determines that the user equipment has left the service area of a particular PSAP, it will send a new LoST <findService> query to find out the new PSAP URI <URI> or even the new <service number>.

However, the service number typically has a much greater boundary of operation than the PSAP URI. For example, the service number 112 is commonly used in most European countries, whilst a PSAP URI might be valid in the limits of a city only.

When the user equipment is in the idle state, each time the user equipment moves out of its service boundary limits, that is out of the current PSAP service area, the user equipment sends a LoST query to find out if the service number 112 has changed. Usually, the service number has not changed, even if the local PSAP itself has changed.

This leads to an inefficient operation. The user equipment has to make LoST queries when the user equipment traverses the PSAP service area boundaries in order to learn both the new PSAP URI but also to determine if the service number has changed. Usually, the service number will be unchanged since the service number typically is valid throughout at least one country, and in the case of Europe across many countries. This leads to a wasting of battery resources in the case of portable user equipment as well as the wasting of network resources and radio resources.

Some embodiments of the present invention aim to address or at least mitigate this.

### SUMMARY OF THE INVENTION:

According to an aspect of the present invention, there is provided a method as defined in claim 1.

According to further aspect of the present invention, there is provided a method as defined in claim 8.

According to another aspect of the present invention, there is provided a server as defined in claim 14.

According to another aspect of the present invention, there is provided a user equipment as defined in claim 16.

According to another aspect of the present invention, there is provided a computer program as defined in claim 18.

### BRIEF DESCRIPTION OF THE DRAWINGS:

For better understanding of the invention, reference will now be made by way of example to the accompanying drawings in which:
Figure 1 shows a communication system wherein the invention may be embodied;
Figure 2 shows a signal flow in embodiments of the invention; and
Figure 3 shows the server and user equipment in more detail.

### DETAILED DESCRIPTION OF PREFERRED EMBODIMENTS OF THE INVENTION

Embodiments of the present invention relate particularly but not exclusively to IP Internet Protocol networks. Examples of IP networks with which embodiments of the present invention may be used include the Internet, or a wireless communication system such as the 3GPP (third generation partnership project) IMS (IP Multimedia Subsystem) or other closed mobile IP networks. Typical access technologies that can carry IP based communications and therefore are relevant to embodiments of the invention include WLAN, WIMAX, CDMA and 3GPP radio access technologies like GSM, WCDMA and LTE. Embodiments of the invention may also be applied to fixed broadband and cable access networks.

Embodiments of the present invention are particularly applicable to those arrangements which can be used with the location to service translation (LoST) protocol which is being standardised in the IETF.

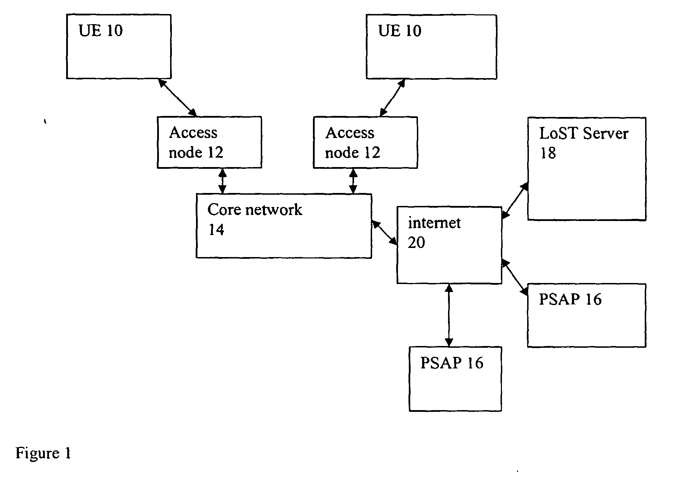

Reference is made to Figure 1 which shows a communication system with which embodiments of the present invention can be used. The system shown in Figure 1 shows two user equipment 10, but embodiments of this invention can be used with any number of user equipment in a network.

The user equipment 10 can take any suitable form and may by way of example only comprise a mobile telephone, a portable computer, a personal data assistant or the like. Embodiments of the present invention are applicable to user equipments which are able to make an emergency call either by a voice connection or by a data or text connection. The user equipment in preferred embodiments of the invention is wireless.

The user equipment 10 communicates via a wireless connection with a suitable access node 12. In the system shown in Figure 1, the user equipment 10 are each connected to different access nodes 12. However, it should be appreciated that in practice a relatively large number of user equipment can be associated with each access node. The access node 12 can take any suitable format and may for example be a base transceiver station, node b or the like.

The access nodes 12 are connected to a core network 14. The connection between the access nodes and the core network are typically via radio links or wired connections. The core network 14 effectively allows access to the Internet 20.

The core network 14 is also connected to a LoST server 18. The server may be part of the core network or separate therefrom. The LoST server 18 may be connected to the core network directly or via the Internet.

The core network 14 is connected to one or more PSAPs 16 and the core network routes the emergency service to the PSAP directly or via a PSTN interworking function.
Embodiments of the present invention decouple the service number from the PSAP boundary and add the description of the boundary of the service number. Two alternatives for achieving this are now described.

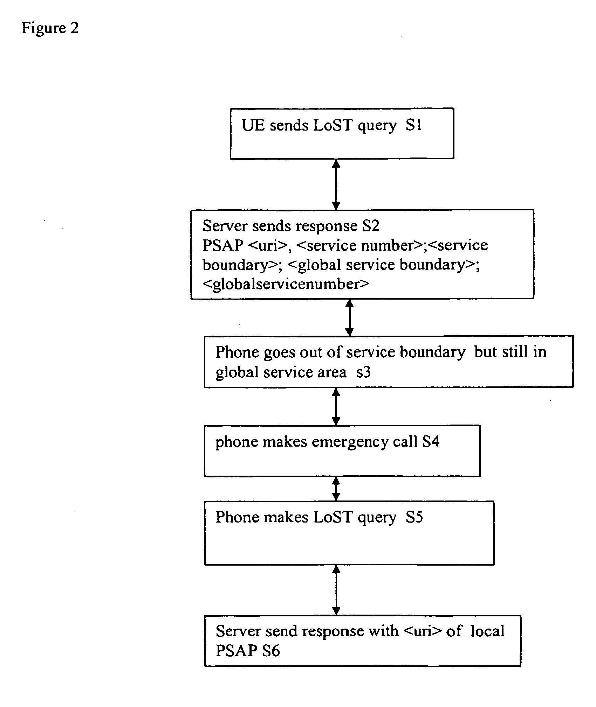

Reference is now made to Figure 2. This shows a flow diagram of an embodiment of the invention.

In the first stage S1, the user equipment sends a LoST query. This LoST query is sent when the phone boots up. It should be appreciated that the user equipment may also send a LoST query for example when the user equipment determines that it has moved outside the PSAP service boundary.

The LoST query comprises the location of the user equipment if available to the user equipment and is sent to the LoST server 18. Effectively, the communication between the user equipment and the LoST server will be via the access nodes 12, the core network 14 and alternatively or additionally via the Internet 20..

The LoST server sends a response in the second stage, S2 which consists of the following information:
1. The local PSAP URI. In other words, information identifying the local PSAP for the user equipment is sent. In the example shown, the address information or identity information comprises the URI. The information identifying the local PSAP can take any other suitable format. It should be appreciated that the server is provided with location information associated with the user equipment in order to make a determination as to the local PSAP. The location information can be provided from a separate location server, from the user equipment itself, or from any suitable source.
2. The response also includes the service number, which is the number that needs to be dialled in an emergency call. So, for example, in some countries in Europe, the emergency number would be 112 whilst in the United States, the emergency number would be 911.
3. The response also includes service boundary information of the local PSAP. The service boundary area is defined in such a way that the user equipment can determine what geographical area is served by the identified local PSAP in question. One example way of describing the service boundary area of the PSAP is the so-called defined area concept standardised by 3GPP, see TS 23.171. In this embodiment, no further geographical service area definition mechanisms (ADD) are described. However the user equipment is such that it is able to determine whether it is within the service boundary area of a given PSAP.
4. Additionally, the response also includes a global service number and a global service boundary. This indicates the global number for the service, i.e. emergency service and the area for which that number is valid. This is independent of the area of the local PSAP. The global service boundary area is typically one country and the user equipment is typically aware of in which country it is. The global service boundary may be smaller than a country; for example a city (e.g. in Russia). In some embodiments the global service boundary could cover two or more countries.

In this stage, S3, it is determined whether or not the phone is still within the global service area S3. So long as the user equipment remains within the limits of the global service area for example a country or group of countries, it does not need to repeat the LoST query to get updated information about the valid emergency number.

In the event of an emergency call, as shown in stage S4, the user will make an emergency call by dialling the emergency service number. The user equipment detects that this is an emergency call, due to the dialled emergency service number and the user equipment may also be able to determine the geographical location where the phone is located.

It should be appreciated that at this point the phone, as illustrated in stage S5 will make a new LoST query. The purpose of this LoST query is to find out the URI of the local PSAP.

The server in the stage S6, as in stage S2 sends various information which will include the URI of the local PSAP.

Thus, even when the user equipment moves out of the known service area boundaries associated with a local PSAP, there is no need to make a new LoST query directly because the URI of a local PSAP is not needed before the phone makes an IP emergency call. Since emergency calls are not very common, some embodiments of the invention may minimize the number of signalling traffic (in particular the number of LoST queries and responses) in most network configurations.

It should be appreciated that in some embodiments of the present invention, in step S2, the response sent only includes the global service boundary and the global service number, omitting items 1. to 3. Information relating to the local PSAP is only obtained when it is required for example when there is an emergency call in response to a specific query for the PSAP.

This embodiment can be modified. In this embodiment, a service number boundary element is provided, instead of the global service boundary and the global service number. This service number boundary defines the boundary associated with that service number. Thus, in this embodiment, the response in stage S2 consists of the PSAP URI, the service number, the service boundary of the PSAP and the service number boundary, which is the boundary of the area for which the service number is valid.

Reference is made to an example of a LoST response, such as will be received in the first embodiment of the invention in stage S2. As can be seen, the embodiments of the invention provide two new XML (extended mark-up language) elements to the LoST response: <global service number> and <global service number boundary>. Additionally, since the LoST protocol permits the describing of a service boundary by reference, a third new XML element called the global service boundary reference is also added. Using this reference the user equipment can look up from a suitable location the extent and definition of the service area associated with the service number. That location can be on the user equipment, on the UICC-card (SIM) (UMTS (Universal Mobile Telecommunications System) Integrated Circuit Card (Subscriber Identity Module)) in the user equipment, in the core network, on a separate server, on a location server or any other suitable location. It is noted that the local PSAP service boundary area can be communicated to the user equipment in the same manner as described above also using LoST.

In preferred embodiments of the present invention, one of either boundary values, that is the global service number boundary or the boundary by reference, the global service number boundary reference is used, typically not at the same time. Other embodiments of the invention may make use of both of the values. The XML response code is as follows:

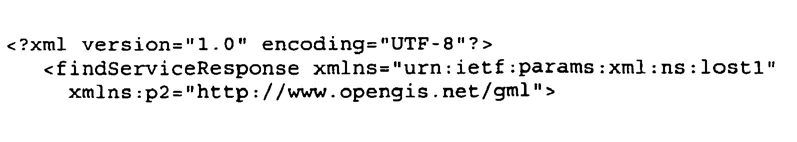

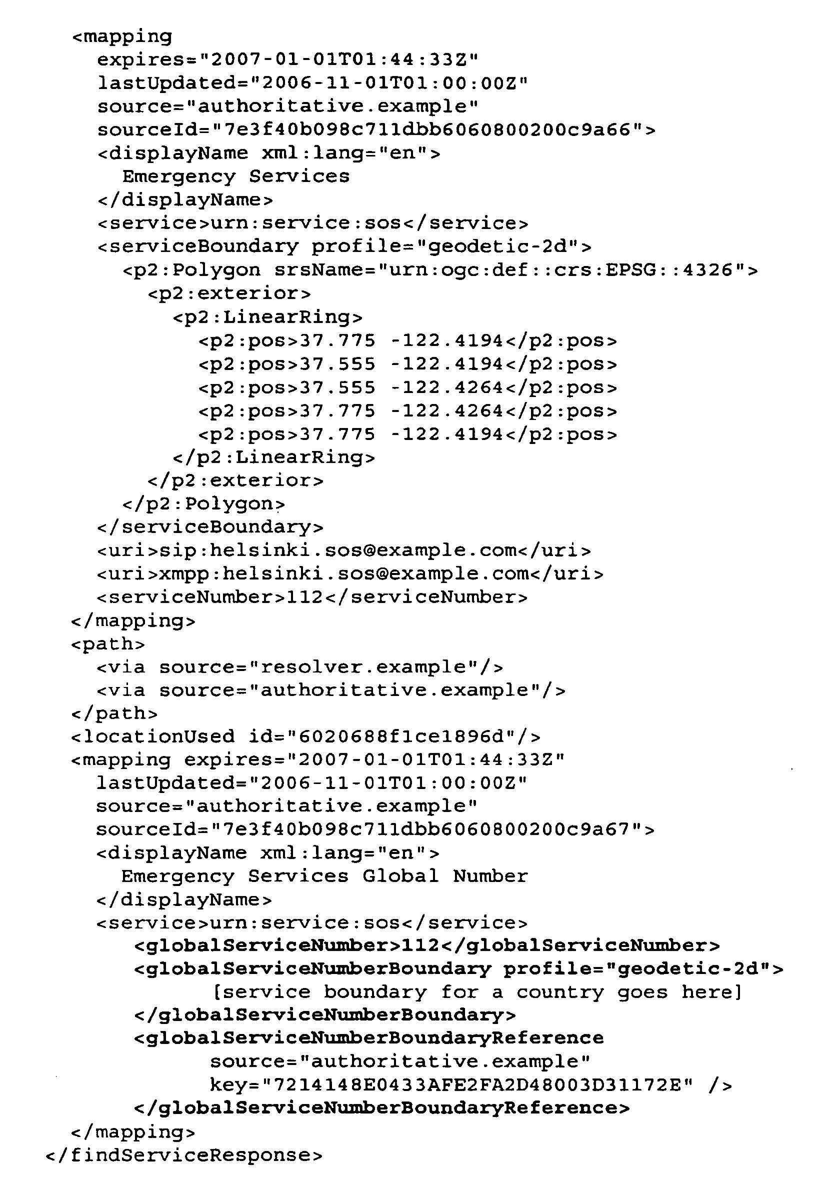

As can be shown from the above code, the global service number is this embodiment is indicated as "112". The global service boundary profile is then described with the service boundary for a country. The examples shows one way of providing a global service number boundary reference with a source (location at which information can be found) and a key (identifying the location or the information in the source).

As described above, there is a second modification which consists of adding a new XML element service number boundary to be LoST response. An example of using this new element is provided below. Again, since LoST allows describing a service boundary by reference, a third new element called service number boundary reference is also added. Again, either the boundary is identified by value or by reference. Typically, one or other of these references is used. Also here it is noted that the service boundary area of the local PSAP can be communicated to the user equipment in the same way.

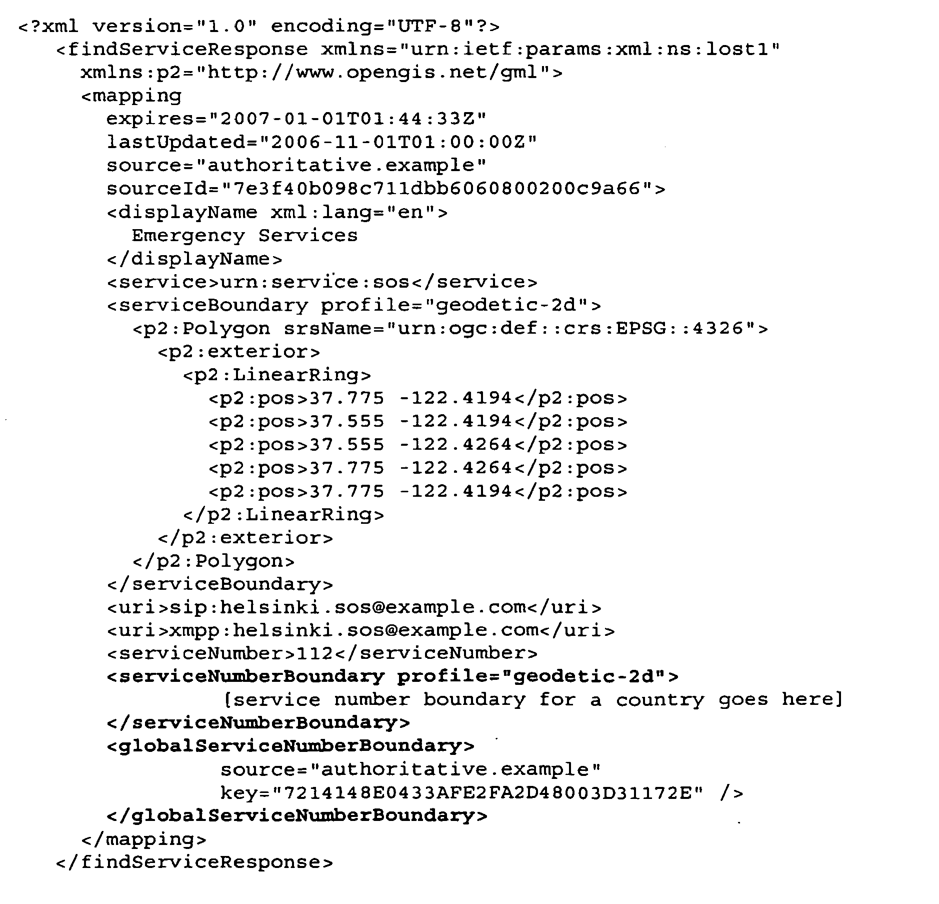

It should be appreciated that this principle may be used with other service numbers as well as or instead of an emergency service number. For example, the service number may be that of a logistics agency or pizza delivery company.

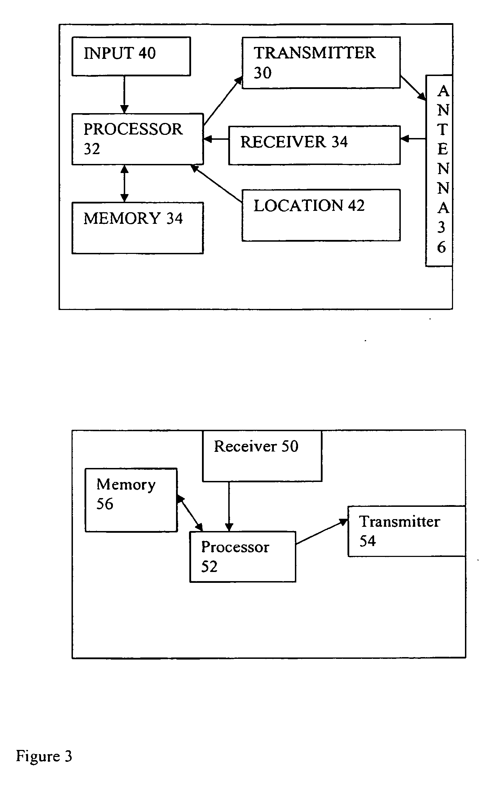

Reference is made to Figure 3 which shows elements of the user equipment 10 and the LoST server 18 in more detail.

The user equipment 10 comprises a transmitter 30 and a receiver 34. The transmitter 30 and receiver 34 are connected to an antenna 36 for transmitting and receiving signals respectively. The user equipment 10 is also provided with a processor 32 and a memory 34.

The processor 32 is arranged to formulate a query. This query is passed to the transmitter 32 which in conjunction with the antenna 36 causes a query to be transmitted.

The receiver 34 is arranged to receive via the antenna 36 a response from the access node 12. This response is the response from the LoST server. The receiver 34 passes that response to the processor 32. The processor 32 is arranged to cause at least part of the information to be stored in the memory.

It should be appreciated that the processor is configured on the detection of boot-up of the user equipment to cause a query to be sent.

The user equipment 10 also comprises an input 40 such as a keyboard, touch-screen or the like. When a service number for example an emergency number is dialled via the input 40, this information is received by the processor 32 from the input 40. The processor is then arranged to make a LoST query, such as set out in step S5.

The user equipment may also comprise location determining circuitry 42 which determines the location of the user equipment. This location determining circuitry can take any suitable format or in the alternative may be arranged to receive location information from for example an access node.

The LoST server 18 comprises receiving circuitry 50 which is arranged to receive queries from the user equipment. The query is passed to a processor 52 of the LoST server which is able to formulate a response which is passed to transmitting circuitry 54 for transmission via various elements to the user equipment.

The server comprises a memory 56 which includes information which is to be included in the response provided by the server. That information is as listed above. The memory can take any suitable form and may comprise a number of memories. If necessary, one or more of the memories may comprise a look-up table where for example location information of a user equipment is used to select the information to be included in the response sent by the server.

Embodiments of the invention have been described in the context of a query response exchange between user equipment and the server. In alternative embodiments of the invention, the exchange may be between the server and a proxy.

It should be appreciated that embodiments of the invention may be implemented by a computer program. The computer program may be provided with one or more computer executable components for carrying out one or more steps on a suitable processor. The computer program may be provided by a computer carrying media.

Although the present invention has been described with reference to examples and the accompanying drawings, it is clear that the invention should not be regarded as being restricted thereto but can be modified in several ways within the scope of the claims.

## Claims

1. A method comprising:
receiving a query at a server (18);
sending a response (S2) from said server (18), said response including a uniform resource identifier for a local public safety answering point (16) and information defining an area for which said local public safety answering point (16) is valid;
**characterized in that** said response further includes an emergency service number and information defining an area for which said emergency service number is valid;
wherein said emergency service number corresponds to said local public safety answering point (16) and said area for which said emergency service number is valid is independent from said area for which said local public safety answering point (16) is valid.

2. A method as claimed in claim 1, wherein said response is based on information about a location of a sender of said query.

3. A method as claimed in claim 2, wherein information about a location of said sender of said query is provided in said query.

4. A method as claimed in any preceding claim, wherein said information defining an area for which said emergency service number is valid comprises a reference by which said area is identified.

5. A method as claimed in any preceding claim, wherein said information defining an area for which said emergency service number is valid comprises geographic information.

6. A method as claimed in any preceding claim, wherein said query and said response are in accordance with the Location-to-Service Translation protocol.

7. A method as claimed in claim 6, wherein said server (18) comprises a Location-to-Service Translation protocol server (18).

8. A method comprising:
sending a query (S1) to a server (18) from user equipment (10);
receiving a response from said server (18), said response including a uniform resource identifier for a local public safety answering point (16) and information defining an area for which said local public safety answering point (16) is valid;
**characterized in that** said response further includes an emergency service number and information defining an area for which said emergency service number is valid;
wherein said emergency service number corresponds to said local public safety answering point (16) and said area for which said emergency service number is valid is independent from said area for which said local public safety answering point (16) is valid.

9. A method as claimed in claim 8, comprising storing in said user equipment (10) said received information.

10. A method as claimed in claim 8 or 9, wherein said user equipment (10) sends a query (S1) when said user equipment is booted up.

11. A method as claimed in any of claims 8 to 10, wherein said user equipment (10) sends a further query (S1) when said user equipment (10) leaves said defined area for which said emergency service number is valid.

12. A method as claimed in any of claims 8 to 11, comprising responsive to said emergency service number being dialled, identifying said call as an emergency call (S4).

13. A method as claimed in claim 12, comprising determining that said user equipment (10) is not in an area served by said local public safety answering point and sending a further request (S5) for a uniform resource identifier for a new local public safety answering point (16) associated with a current location of said user equipment (10).

14. A server (18) configured to receive a query and to send a response (S2), said response including a uniform resource identifier for a local public safety answering point (16) and information defining an area for which said local public safety answering point (16) is valid;
**characterized in that** said response further includes an emergency service number and information defining an area for which said emergency service number is valid;
wherein said emergency service number corresponds to said local public safety answering point (16) and said area for which said emergency service number is valid is independent from said area for which said local public safety answering point (16) is valid.

15. A server (18) as claimed in claim 14, wherein said server (18) comprises a Location-to-Service Translation protocol server (18).

16. A user equipment (10) configured to send a query (S1) to a server (18) and to receive a response from said server (18), said response including a uniform resource identifier for a local public safety answering point (16) and information defining an area for which said local public safety answering point (16) is valid;
**characterized in that** said response further includes an emergency service number and information defining an area for which said emergency service number is valid;
wherein said emergency service number corresponds to said local public safety answering point (16) and said area for which said emergency service number is valid is independent from said area for which said local public safety answering point (16) is valid.

17. A user equipment (10) as claimed in claim 16, comprising a memory (34) for storing in said user equipment (10) said received information.

18. A computer program comprising code means arranged to perform all of the steps of any of claims 1 to 13, when the program is run on a processor.

## Patentansprüche

1. Verfahren mit den folgenden Schritten:
Empfangen einer Anfrage in einem Server (18);
Senden einer Antwort (S2) von dem Server (18), wobei die Antwort einen Uniform Resource Identifier für einen lokalen öffentlichen Sicherheits-Beantwortungspunkt (16) und Informationen, die ein Gebiet definieren, für das der lokale öffentliche Sicherheits-Beantwortungspunkt (16) gültig ist, umfasst;
**dadurch gekennzeichnet, dass** die Antwort ferner eine Notdienstnummer und Informationen, die ein Gebiet definieren, für das die Notdienstnummer gültig ist, umfasst;
wobei die Notdienstnummer dem lokalen öffentlichen Sicherheits-Beantwortungspunkt (16) entspricht und das Gebiet, für das die Notdienstnummer gültig ist, von dem Gebiet, für das der lokale öffentliche Sicherheits-Beantwortungspunkt (16) gültig ist, unabhängig ist.

2. Verfahren nach Anspruch 1, wobei die Antwort auf Informationen über einen Ort eines Absenders der Anfrage basiert.

3. Verfahren nach Anspruch 2, wobei Informationen über einen Ort des Absenders der Anfrage in der Anfrage bereitgestellt werden.

4. Verfahren nach einem der vorhergehenden Ansprüche, wobei die Informationen, die ein Gebiet definieren, für das die Notdienstnummer gültig ist, einen Verweis umfassen, durch den das Gebiet identifiziert wird.

5. Verfahren nach einem der vorhergehenden Ansprüche, wobei die Informationen, die ein Gebiet definieren, für das die Notdienstnummer gültig ist, geografische Informationen umfassen.

6. Verfahren nach einem der vorhergehenden Ansprüche, wobei die Anfrage und die Antwort dem Protokoll der Location-to-Service Translation entsprechen.

7. Verfahren nach Anspruch 6, wobei der Server (18) einen Protokollserver (18) der Location-to-Service Translation umfasst.

8. Verfahren mit den folgenden Schritten:
Senden einer Anfrage (S1) zu einem Server (18) vom Benutzergerät (10);
Empfangen einer Antwort von dem Server (18), wobei die Antwort einen Uniform Resource Identifier für einen lokalen öffentlichen Sicherheits-Beantwortungspunkt (16) und Informationen, die ein Gebiet definieren, für das der lokale öffentliche Sicherheits-Beantwortungspunkt (16) gültig ist, umfasst;
**dadurch gekennzeichnet, dass** die Antwort ferner eine Notdienstnummer und Informationen, die ein Gebiet definieren, für das die Notdienstnummer gültig ist, umfasst;
wobei die Notdienstnummer dem lokalen öffentlichen Sicherheits-Beantwortungspunkt (16) entspricht und das Gebiet, für das die Notdienstnummer gültig ist, von dem Gebiet, für das der lokale öffentliche Sicherheits-Beantwortungspunkt (16) gültig ist, unabhängig ist.

9. Verfahren nach Anspruch 8, mit dem Schritt des Speicherns der empfangenen Informationen in dem Benutzergerät (10).

10. Verfahren nach Anspruch 8 oder 9, wobei das Benutzergerät (10) eine Anfrage (S1) sendet, wenn das Benutzergerät heraufgefahren wird.

11. Verfahren nach einem der Ansprüche 8 bis 10, wobei das Benutzergerät (10) eine weitere Anfrage (S1) sendet, wenn das Benutzergerät (10) das definierte Gebiet verlässt, für das die Notdienstnummer gültig ist.

12. Verfahren nach einem der Ansprüche 8 bis 11, bei dem als Reaktion auf das Wählen der Notdienstnummer der Anruf als ein Notruf (S4) identifiziert wird.

13. Verfahren nach Anspruch 12, bei dem bestimmt wird, dass sich das Benutzergerät (10) nicht in einem durch den lokalen öffentlichen Sicherheits-Beantwortungspunkt versorgten Gebiet befindet und eine weitere Anforderung (S5) eines Uniform Resource Identifier für einen neuen lokalen öffentlichen Sicherheits-Beantwortungspunkt (16), der mit einem aktuellen Ort des Benutzergeräts (10) assoziiert ist, gesendet wird.

14. Server (18), der dafür ausgelegt ist, eine Anfrage zu empfangen und eine Antwort (S2) zu senden, wobei die Antwort einen Uniform Resource Identifier für einen lokalen öffentlichen Sicherheits-Beantwortungspunkt (16) und Informationen, die ein Gebiet definieren, für das der lokale öffentliche Sicherheits-Beantwortungspunkt (16) gültig ist, umfasst;
**dadurch gekennzeichnet, dass** die Antwort ferner eine Notdienstnummer und Informationen, die ein Gebiet definieren, für das die Notdienstnummer gültig ist, umfasst;
wobei die Notdienstnummer dem lokalen öffentlichen Sicherheits-Beantwortungspunkt (16) entspricht und das Gebiet, für das die Notdienstnummer gültig ist, von dem Gebiet, für das der lokale öffentliche Sicherheits-Beantwortungspunkt (16) gültig ist, unabhängig ist.

15. Server (18) nach Anspruch 14, wobei der Server (18) einen Protokollserver (18) der Location-to-Service Translation umfasst.

16. Benutzergerät (10), das dafür ausgelegt ist, eine Anfrage (S1) zu einem Server (18) zu senden und eine Antwort von dem Server (18) zu empfangen, wobei die Antwort einen Uniform Resource Identifier für einen lokalen öffentlichen Sicherheits-Beantwortungspunkt (16) und Informationen, die ein Gebiet definieren, für das der lokale öffentliche Sicherheits-Beantwortungspunkt (16) gültig ist, umfasst;
**dadurch gekennzeichnet, dass** die Antwort ferner eine Notdienstnummer und Informationen, die ein Gebiet definieren, für das die Notdienstnummer gültig ist, umfasst;
wobei die Notdienstnummer dem lokalen öffentlichen Sicherheits-Beantwortungspunkt (16) entspricht und das Gebiet, für das die Notdienstnummer gültig ist, von dem Gebiet, für das der lokale öffentliche Sicherheits-Beantwortungspunkt (16) gültig ist, unabhängig ist.

17. Benutzergerät (10) nach Anspruch 16, das einen Speicher (34) zum Speichern der empfangenen Informationen in dem Benutzergerät (10) umfasst.

18. Computerprogramm, das Codemittel umfasst, die dafür ausgelegt sind, alle Schritte nach beliebigen der Ansprüche 1 bis 13 auszuführen, wenn das Programm auf einem Prozessor ausgeführt wird.

## Revendications

1. Un procédé comprenant :
la réception d'une demande sur un serveur (18),
l'envoi d'une réponse (S2) à partir dudit serveur (18), ladite réponse contenant un identifiant de ressource uniforme pour un point de réponse de sécurité public local (16) et des informations définissant une zone pour laquelle ledit point de réponse de sécurité public local (16) est valide,
**caractérisé en ce que** ladite réponse contient en outre un numéro de service d'urgence et des informations définissant une zone pour laquelle ledit numéro de service d'urgence est valide,
dans lequel ledit numéro de service d'urgence correspond audit point de réponse de sécurité public local (16) et ladite zone pour laquelle ledit numéro de service d'urgence est valide est indépendante de ladite zone pour laquelle ledit point de réponse de sécurité public local (16) est valide.

2. Un procédé selon la revendication 1, dans lequel ladite réponse est basée sur des informations relatives à un emplacement d'un expéditeur de ladite demande.

3. Un procédé selon la revendication 2, dans lequel les informations relatives à un emplacement dudit expéditeur de ladite demande sont fournies dans ladite demande.

4. Un procédé selon l'une quelconque des revendications précédentes, dans lequel lesdites informations définissant une zone pour laquelle ledit numéro de service d'urgence est valide contiennent une référence au moyen de laquelle ladite zone est identifiée.

5. Un procédé selon l'une quelconque des revendications précédentes, dans lequel lesdites informations définissant une zone pour laquelle ledit numéro de service d'urgence est valide contiennent des informations géographiques.

6. Un procédé selon l'une quelconque des revendications précédentes, dans lequel ladite demande et ladite réponse sont conformes au protocole de conversion emplacement à service (Lost).

7. Un procédé selon la revendication 6, dans lequel ledit serveur (18) comprend un serveur de protocole de conversion emplacement à service (Lost)(18).

8. Un procédé comprenant :
l'envoi d'une demande (S1) à un serveur (18) à partir d'un équipement d'utilisateur (10),
la réception d'une réponse à partir dudit serveur (18), ladite réponse contenant un identifiant de ressource uniforme pour un point de réponse de sécurité public local (16) et des informations définissant une zone pour laquelle ledit point de réponse de sécurité public local (16) est valide,
**caractérisé en ce que** ladite réponse contient en outre un numéro de service d'urgence et des informations définissant une zone pour laquelle ledit numéro de service d'urgence est valide,
dans lequel ledit numéro de service d'urgence correspond audit point de réponse de sécurité public local (16) et ladite zone pour laquelle ledit numéro de service d'urgence est valide est indépendante de ladite zone pour laquelle ledit point de réponse de sécurité public local (16) est valide.

9. Un procédé selon la revendication 8, comprenant la mise en mémoire dans ledit équipement d'utilisateur (10) desdites informations reçues.

10. Un procédé selon la revendication 8 ou 9, dans lequel ledit équipement d'utilisateur (10) envoie une demande (S1) lorsque ledit équipement d'utilisateur (10) est amorcé.

11. Un procédé selon l'une quelconque des revendications 8 à 10, dans lequel ledit équipement d'utilisateur (10) envoie une autre demande (S1) lorsque ledit équipement d'utilisateur (10) quitte ladite zone définie pour laquelle ledit numéro de service d'urgence est valide.

12. Un procédé selon l'une quelconque des revendications 8 à 11, comprenant, en réponse à la composition dudit numéro de service d'urgence, l'identification dudit appel comme étant un appel d'urgence (S4).

13. Un procédé selon la revendication 12, comprenant la détermination que ledit équipement d'utilisateur (10) ne se trouve pas dans une zone desservie par ledit point de réponse de sécurité public local et l'envoi d'une autre demande (S5) d'un identifiant de ressource uniforme pour un nouveau point de réponse de sécurité public local (16) associé à un emplacement actuel dudit équipement d'utilisateur (10).

14. Un serveur (18) configuré de façon à recevoir une demande et à envoyer une réponse (S2), ladite réponse contenant un identifiant de ressource uniforme pour un point de réponse de sécurité public local (16) et des informations définissant une zone pour laquelle ledit point de réponse de sécurité public local (16) est valide,
**caractérisé en ce que** ladite réponse contient en outre un numéro de service d'urgence et des informations définissant une zone pour laquelle ledit numéro de service d'urgence est valide,
dans lequel ledit numéro de service d'urgence correspond audit point de réponse de sécurité public local (16) et ladite zone pour laquelle ledit numéro de service d'urgence est valide est indépendante de ladite zone pour laquelle ledit point de réponse de sécurité public local (16) est valide.

15. Un serveur (18) selon la revendication 14, dans lequel ledit serveur (18) comprend un serveur de protocole de conversion emplacement à service (Lost)(18).

16. Un équipement d'utilisateur (10) configuré de façon à envoyer une demande (S1) à un serveur (18) et à recevoir une réponse dudit serveur (18), ladite réponse contenant un identifiant de ressource uniforme pour un point de réponse de sécurité public local (16) et des informations définissant une zone pour laquelle ledit point de réponse de sécurité public local (16) est valide,
**caractérisé en ce que** ladite réponse contient en outre un numéro de service d'urgence et des informations définissant une zone pour laquelle ledit numéro de service d'urgence est valide,
dans lequel ledit numéro de service d'urgence correspond audit point de réponse de sécurité public local (16) et ladite zone pour laquelle ledit numéro de service d'urgence est valide est indépendante de ladite zone pour laquelle ledit point de réponse de sécurité public local (16) est valide.

17. Un équipement d'utilisateur (10) selon la revendication 16, comprenant une mémoire (34) destinée à conserver en mémoire dans ledit équipement d'utilisateur (10) lesdites informations reçues.

18. Un programme informatique comprenant un moyen de code agencé de façon à exécuter toutes les opérations selon l'une quelconque des revendications 1 à 13, lorsque le programme est exécuté sur un processeur.
